# EUROPEAN PATENT APPLICATION

(11) **EP 4 718 652 A1**
(43) Date of publication of application: **01.04.2026**
(21) Application number: 25199588.2
(22) Date of filing: 02.09.2025
(51) Int. Cl.: H02H 3/087, H02H 7/18, H02H 7/26

(54) **APPARATUS AND METHOD FOR CONTROLLING MAIN LINE SWITCH**

(30) Priority: 12.09.2024 KR 20240125143
(71) Applicant: SAMSUNG SDI CO., LTD., Yongin-si, Gyeonggi-do 17084 (KR)
(72) Inventor: OKUI, Yoshiaki, 17084 Yongin-si (KR)
(74) Representative: Marks & Clerk LLP

(57) **Abstract**

An apparatus for controlling a main line switch mounted on an energy storage system is provided. The energy storage system includes a plurality of battery racks and a disconnect switch unit. The apparatus includes: a battery connection unit respectively on each of the battery racks, the battery connection unit being configured to measure a current of a corresponding one of the battery racks by using a built-in current measurement unit and to generate an overcurrent detection signal when the current of the corresponding one of the battery racks exceeds an overcurrent protection level; and a switch controller configured to open the disconnect switch unit to block a main line current flowing to the energy storage system in response to the overcurrent detection signal from a reference number or more of battery connection units.

## Description

### BACKGROUND

### 1. Field

Aspects of embodiments of the present disclosure relate to an apparatus and method for controlling a main line switch.

### 2. Description of the Related Art

An energy storage system (ESS) includes a plurality of battery racks (hereinafter individually referred to as a "rack") in parallel. Each rack individually performs overcurrent protection control. When a high current flows in a DC (direct current) main line, racks block the current at substantially the same time, but because the racks are individually controlled, a blocking timing of each rack cannot be completely the same, and a slight time difference inevitably occurs. In this case, a contactor that blocks the current last (e.g., the last contactor to block the current) needs to block the same current as the main line current, which causes damage.

To mitigate such a problem, a method of safely opening the contactor of each rack by setting a time delay to an overcurrent protection control unit of each rack and blocking an overcurrent of the main line by using a disconnect switch unit (DSU) during the time delay has been considered. However, such a method can be dangerous because the time for overcurrent to flow is longer when the time delay is long.

In addition, to set a short time delay from a time point of overcurrent detection to the blocking of the main line current, that is, to quickly block the overcurrent, a method of installing an overcurrent detection function in a switch controller and using a large shunt resistor to detect the main line current has been considered, but this causes cost increases to occur.

The above information disclosed in this Background section is for enhancement of understanding of the background of the present disclosure, and therefore, it may contain information that does not constitute the related (or prior) art.

### SUMMARY

Embodiments of the present disclosure relate to an apparatus and method for protecting a plurality of battery racks mounted on an energy storage system (ESS) from an overcurrent. Embodiments of the present disclosure are directed to providing an apparatus and method for controlling a main line switch, which provides a time delay from an overcurrent detection time point of each rack to a time point when a contactor is opened and controls a large switch configure to block a DC main line current based on an overcurrent detection signal of each rack.

Aspects and features of the present disclosure are not limited to the above-described aspects and features, and other aspects and features that are not mentioned will be clearly understood by those skilled in the art from the following description.

An apparatus for controlling a main line switch according to an embodiment of the present disclosure controls a disconnect switch unit mounted on an energy storage system including a plurality of battery racks.

An apparatus for controlling a main line switch mounted on an energy storage system including a plurality of battery racks and a disconnect switch unit includes a battery connection unit respectively on each of the battery racks and configured to measure a current of the corresponding one of the battery racks by using a built-in current measurement unit and to generate an overcurrent detection signal when the current of the corresponding one of the battery racks exceeds a overcurrent protection level, and a switch controller configured to open the disconnect switch unit to block a main line current flowing to the energy storage system in response to the overcurrent detection signal from a number or more of battery connection units.

The number of battery connection units may be two or more.

The battery connection unit may be configured to open a contactor of the corresponding one of the battery racks to block a current flowing thereto after a time delay from a time point when the overcurrent detection signal is generated.

The current measurement unit may include a shunt resistor.

The battery connection unit may be configured to transmit the overcurrent detection signal to the switch controller as a contact point signal.

The battery connection unit may be configured to measure the current of the corresponding one of the battery racks at sampling periods, generate the overcurrent detection signal when the current of the target battery rack continuously exceeds the overcurrent protection level a number of times, and transmit the overcurrent detection signal to the switch controller.

The time delay may be greater than the sum of a time for transmitting the contact point signal to the switch controller from the battery connection unit and an operation time of the disconnect switch unit.

A method of controlling a main line switch of an energy storage system including a plurality of battery racks according to an embodiment of the present disclosure includes: measuring, by a battery connection unit respectively on each of the battery racks, a current of a corresponding one of the battery racks by using a current measurement unit, generating an overcurrent detection signal when the current of the corresponding one of the battery racks exceeds an overcurrent protection level, and transmitting the overcurrent detection signal to a switch controller; opening, by the switch controller, a disconnect switch unit to block a main line current flowing to the energy storage system when receiving a number or more of overcurrent detection signals.

The method may further comprise opening, by the battery connection unit, a contactor of the target battery rack to block a current flowing to the corresponding one of the battery racks after a time delay from a time point when the overcurrent detection signal is generated.

The number of overcurrent detection signals may be two or more.

The current measurement unit may include a shunt resistor.

The measuring of the current may include transmitting, by the battery connection unit, the overcurrent detection signal to the switch controller as a contact point signal.

The measuring of the current may include measuring, by the battery connection unit, the current of the corresponding one of the battery racks at sampling periods, generating the overcurrent detection signal when the current of the corresponding one of the battery racks continuously exceeds the overcurrent protection level a number of times, and transmitting the overcurrent detection signal to the switch controller.

The time delay may be greater than a sum of a time for transmitting the contact point signal to the switch controller from the battery connection unit and an operation time of the disconnect switch unit.

Aspects and features of the present disclosure are not limited to those described above, and other aspects and features not specifically mentioned herein will be clearly understood by those skilled in the art from the description of the present disclosure below. At least some of the above and other features of the invention are set out in the claims.

### BRIEF DESCRIPTION OF THE DRAWINGS

The above and other aspects and features of the present disclosure will become more apparent to those of ordinary skill in the art by describing embodiments thereof, in detail, with reference to the accompanying drawings, in which:
FIG. 1 is a block diagram showing a configuration of an energy storage system;
FIG. 2 is a schematic illustration of a general current control system of an energy storage system;
FIGS. 3 and 4 are timing diagrams describing a relationship between a blocking timing of a main line current and damage to a contactor;
FIG. 5A is a schematic illustration of an example in which an overcurrent is detected by using a large shunt resistor to block a main line current;
FIG. 5B is a control block diagram illustrating an example in which the overcurrent is detected using the large shunt resistor to block the main line current;
FIG. 6A is a schematic illustration of an example in which a current value of each battery rack is summed, and when the sum exceeds a reference value, a main line current is blocked;
FIGS. 6B and 6C are control block diagrams illustrating an example in which the current value of each battery rack is summed, and when the sum exceeds the reference value, the main line current is blocked;
FIG. 7A is a schematic illustration of an apparatus for controlling a main line switch according to an embodiment of the present disclosure;
FIG. 7B is a control block diagram illustrating an apparatus for controlling a main line switch according to an embodiment of the present disclosure;
FIG. 8 is a diagram illustrating a sampling period at which a battery management system (BMS) detects an overcurrent of a battery rack;
FIG. 9 is a timing diagram illustrating a main line current blocking time point of the apparatus for controlling a main line switch and a contactor opening time point of each battery rack according to an embodiment of the present disclosure;
FIG. 10 is an electrical circuit diagram illustrating an energy storage system to which the apparatus for controlling a main line switch according to an embodiment of the present disclosure is applied; and
FIG. 11 is a flowchart describing steps of a method of controlling a main line switch according to an embodiment of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

Embodiments of the present disclosure provide an apparatus and method for controlling a large switch related to a DC main line current based on an overcurrent detection signal of each battery rack (which may be referred to as a "rack" herein) in an energy storage system (ESS).

According to embodiments of the present disclosure, an apparatus and method for safely performing an overcurrent protection operation of the battery rack in the ESS is provided, in which a battery management system (BMS) of each battery rack gives a preset minimum time delay from a time point when an overcurrent of the battery rack is detected to an overcurrent protection time point by a contactor and transmits an overcurrent detection signal to a switch controller as a contact point signal, and the switch controller performs an opening (OFF) operation of a disconnect switch unit when the number of contact point signals received from each battery rack is more than a reference (or predetermined) number.

Hereinafter, embodiments of the present disclosure will be described, in detail, with reference to the accompanying drawings. To facilitate overall understanding in the description of the present disclosure, the same reference numerals will be used for the same components and/or configurations regardless of drawing number.

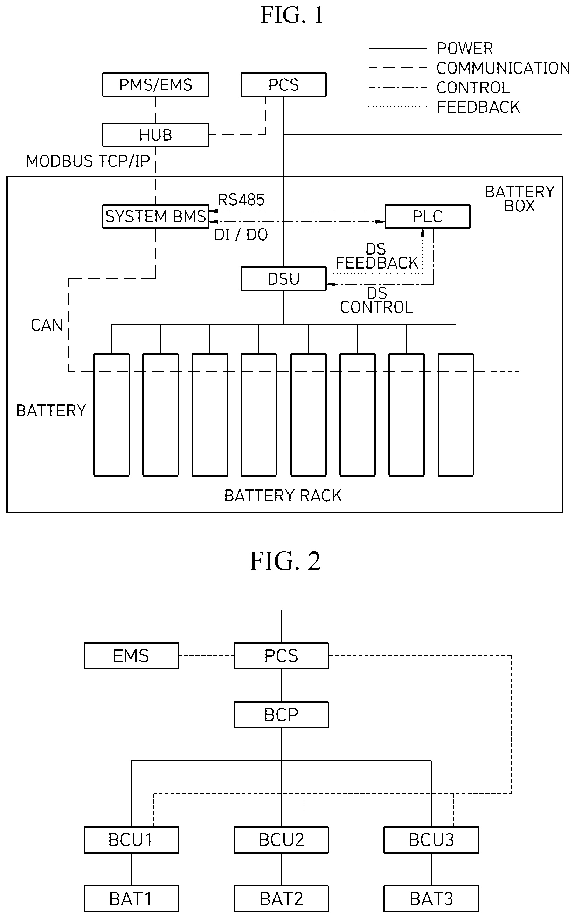

FIG. 1 is a block diagram illustrating a configuration of an energy storage system (ESS). FIG. 1 illustrates the power/communication/control system of a general energy storage system.

A power management system (PMS) or an energy management system (EMS) communicates with a power conditioning system (PCS) and a system battery management system (SBMS or System BMS) through a hub to set conditions for charging and discharging the ESS and controls and monitors the ESS.

The PCS receives power from a power system and changes electrical characteristics of the power, such as frequency, voltage, DC/AC, etc., to charge a battery or discharge to the power system.

The SBMS may transmit and receive information to and from the BMS mounted on each battery rack through a controller area network (CAN) communication bus and control a disconnect switch unit (DSU) or may receive feedback through a switch controller built in a programmable logic circuit (PLC) or a dedicated control board.

FIG. 2 is a schematic view of a general current control system of the ESS.

The ESS shown in FIG. 2 includes a plurality of battery racks BAT1, BAT2, and BAT3, and each battery rack is connected in parallel to a battery connection panel (BCP) through a battery connection unit BCU1, BCU2, or BCU3 disposed in each rack. The BCP connects a plurality of battery racks to a single connection point.

The BCU disposed on each rack has a built-in rack BMS and contactor. The contactor protects a battery rack from an overcurrent. When an overcurrent that exceeds a reference (or predetermined) threshold value is generated in a battery rack BAT, the rack BMS determines (or engages) overcurrent protection (OCP) and opens (which may also be referred to as turning or setting to "OFF") the contactor to protect the rack from the overcurrent.

Even when an overcurrent is generated in the DC main line connected to the ESS, the timing at which each contactor is opened (OFF) is not the same because each rack independently detects the overcurrent. In this case, the contactor that is opened last is likely to be damaged because it blocks the current (e.g., the entire current) of the full DC main line.

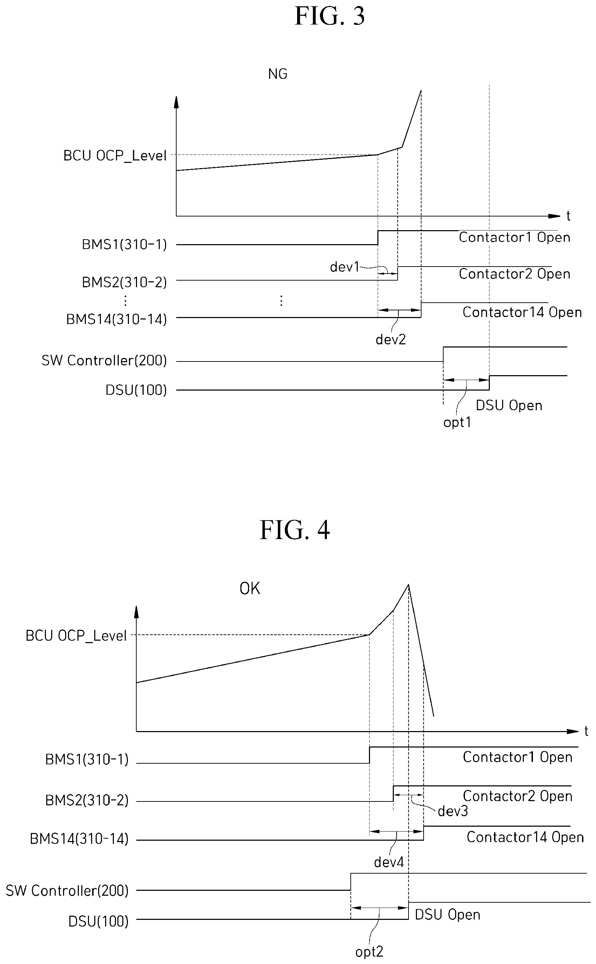

FIGS. 3 and 4 are timing diagrams describing a relationship between a blocking timing of a main line current and damage to a contactor.

FIG. 3 is a timing diagram for describing a situation in which the blocking timing of the main line current is delayed and a full DC main line current flows to a contactor of a specific battery rack. Each battery rack is provided with a rack BMS 310-1, 310-2, ..., 310-14, and the rack BMS 310 opens a contactor to protect the corresponding battery rack from an overcurrent when a current flowing through the battery rack increases and the detected current exceeds a reference (or predetermined) BCU overcurrent protection level (BCU OCP level). Because each rack BMS 310-1, 310-2, ..., 310-14 independently detects an overcurrent, time points when contactors are opened may not be the same. As illustrated in FIG. 3, there is a time difference dev1 between a time point when Contactor 1 is opened by the BMS1 310-1 and a time point when Contactor 2 is opened by the BMS2 310-2, and there is a time difference dev2 between the time point when Contactor 1 is opened by the BMS1 310-1 and a time point when Contactor 14 is opened by the BMS14 310-14. When the time point when Contactor 14 is opened by the BMS14 310-14 is later than time points when contactors are opened by BMSs of other battery racks and a time point when a DSU 100 blocks the main line current (DSU Open) by a switch controller 200 is later than the time point when Contactor 14 is opened, Contactor 14 can be damaged because it blocks the current while a full DC main line current flows (e.g., Contactor 14 is subjected to the entire DC mail line current).

However, as illustrated in FIG. 4, even when the opening time point of Contactor 14 is later than the opening time point of Contactor 1 or Contactor 2 (time differences dev 3 and dev 4, respectively), Contactor 14 is not damaged because the DSU 100 blocks the main line current before the opening time point of Contactor 14. That is, when the DSU 100 blocks the main line current before the contactor of each battery rack is opened, the last contactor to block the current flowing to the battery rack is not damaged. Embodiments of the present disclosure provide an apparatus and method for controlling a main line switch that allows (e.g., controls) the DSU 100 to be opened before the contactor that lastly blocks (e.g., the last contactor to block) the current flowing to the battery rack is opened.

For reference, in FIGS. 3 and 4, the time necessary for opening the DSU 100 by the control of switch controller 200 are represented as opt1 and opt2, respectively.

Before describing the apparatus and method for controlling a main line switch according to an embodiment of the present disclosure, two examples that can be compared with embodiments of the present disclosure are described. The first example is an example in which an overcurrent is detected by using a large shunt resistor to block a main line current, and the second example is an example in which current values of battery racks are summed, and when the sum exceeds a reference value, the main line current is blocked.

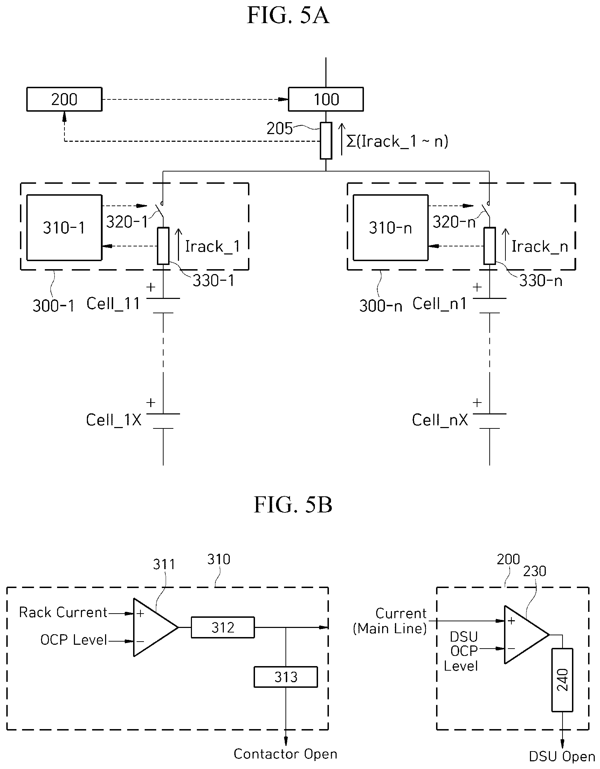

FIG. 5A is a view illustrating an example (the first comparative example) in which an overcurrent is detected by using a large shunt resistor to block a main line current, and FIG. 5B is a control block diagram illustrating the first comparative example.

The first comparative example includes an overcurrent detection function installed in the switch controller 200 to quickly block the DSU 100. The BCU 300 is disposed in each battery rack, and the BCU 300 includes the rack BMS 310, a contactor 320, and a current measurement unit 330. The rack BMS 310 detects the current flowing in the battery rack through the current measurement unit 330, and when the detected current exceeds a reference (or predetermined) OCP level, the rack BMS 310 controls the contactor 320 to be opened (e.g., opens the contactor 320) to block the current flowing in the battery rack. As illustrated in FIG. 5A, in the first comparative example, the switch controller 200 detects a main line current Σ(I_{rack_1} to I_{rack_n}) by using a large shunt resistor 205, and when the main line current exceeds a reference (or predetermined) threshold value, the DSU 100 is opened to block the main line current.

In the present specification, the "large shunt resistor" is a shunt resistor for measuring a large current input to each battery rack or a large current adding the current output from each battery rack. For reference, the shunt resistor physically increases in size as the measured current increases.

As illustrated in FIG. 5B, the rack BMS 310 includes an operational amplifier 311, a malfunction prevention counter 312, and an OCP time delay unit 313. The operational amplifier 311 receives the current of the battery rack through a positive input terminal, receives the OCP level through a negative input terminal, and then outputs a signal that amplifies a difference between the current of the battery rack and the OCP level to the malfunction prevention counter 312. The malfunction prevention counter 312 counts the number of times the output signal of the operational amplifier 311 exceeds a reference (or predetermined) threshold value and operates the OCP time delay unit 313 when the number reaches a set number of times. The OCP time delay unit 313 controls the contactor 320 to be opened after a preset time has elapsed.

The switch controller 200 measures the main line current by using the large shunt resistor 205, inputs the main line current to the positive input terminal of an operational amplifier 230, inputs the DSU OCP level to the negative input terminal, and transmits the amplified signal to a malfunction prevention counter 240. The malfunction prevention counter 240 counts the number of times the output signal of the operational amplifier 230 exceeds the reference (or predetermined) threshold value and controls the DSU 100 to be opened when the number reaches the set number of times.

The first comparative example is relatively expensive because the overcurrent detection function is installed in the switch controller 200 and the large shunt resistor 205 is used to detect the main line current.

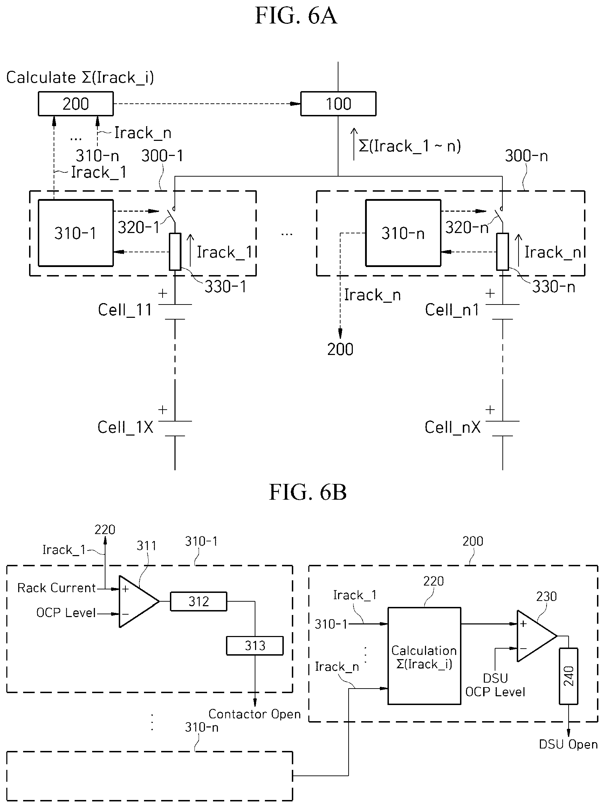

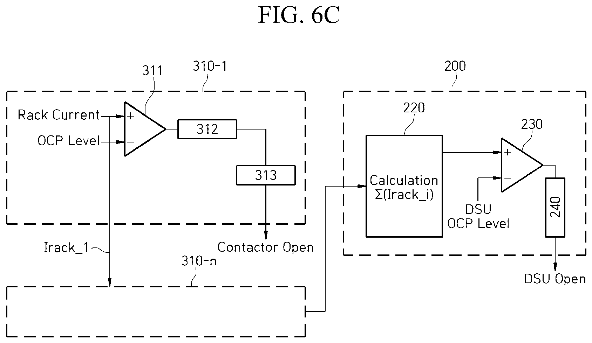

FIG. 6A is a view illustrating an example (the second comparative example) in which current values of battery racks are summed, and when the sum exceeds a reference value, the main line current is blocked, and FIGS. 6B and 6C are control block diagrams illustrating the second comparative example.

In the second comparative example, as illustrated in FIG. 6A, the switch controller 200 sums the current values collected from the rack BMSs 310, and when the summed current value exceeds the DSU OCP level, the switch controller 200 controls the DSU 100 to be opened to block the main line current.

The second comparative example operates on a time delay set in each rack BMS 310 when an overcurrent is detected, and when the overcurrent is detected in the main line during the time delay, the DSU 100 is opened to block the main line current, thereby safely opening the contactor of each rack.

Similar to the first comparative example, in the second comparative example, the BCU 300 is disposed in each battery rack, and the BCU 300 includes the rack BMS 310, the contactor 320, and the current measurement unit 330. The rack BMS 310 detects the current flowing in the battery rack through the current measurement unit 330, and when the detected current exceeds a reference (or predetermined) OCP level, the rack BMS 310 controls the contactor 320 to be opened to block the current flowing in the battery rack. As illustrated in FIG. 6A, in the second comparative example, the switch controller 200 sums the current values of the battery racks collected from the rack BMSs 310, and when the summed current value exceeds the DSU OCP level, the switch controller 200 opens the DSU 100 to block the main line current.

As illustrated in FIG. 6B, the rack BMS 310 includes the operational amplifier 311, the malfunction prevention counter 312, and the OCP time delay unit 313, and each function of these components is the same as in the first comparative example. However, in the second comparative example, the rack BMS 310 transmits the current value of the battery rack to a current aggregation unit 220 of the switch controller 200. FIG. 6B shows an example in which the current aggregation unit 220 collects and sums the current values of the battery racks, and FIG. 6C shows an example in which the sum of the current values of the battery racks is sequentially transmitted between a plurality of rack BMSs 310 so that the final sum is transmitted to the current aggregation unit 220.

Referring to FIG. 6B, the current aggregation unit 220 of the switch controller 200 collects and sums the current values I_{rack_1}, ..., and I_{rack_n} of the battery racks from the rack BMSs 310-1, ..., and 310-n and inputs the summed current value to the positive input terminal of the operational amplifier 230. The operational amplifier 230 receives the summed current value through the positive input terminal, receives the DSU OCP level through the negative input terminal, and then outputs a signal that amplifies a difference between the summed current value and the DSU OCP level to the malfunction prevention counter 240. The malfunction prevention counter 240 counts the number of times the output signal of the operational amplifier 230 exceeds the reference (or predetermined) threshold value and controls the DSU 100 to be opened when the number reaches the set number.

The example shown in FIG. 6B is a method in which the current aggregation unit 220 directly communicates with each rack BMS 310-1, ..., or 310-n, and each rack BMS 310-1, ..., or 310-n needs to transmit analog data to the current aggregation unit 220. However, the example shown in FIG. 6B has a complicated interface of the current aggregation unit 220 when the number of battery racks increases and, thus, is not practical.

The example shown in FIG. 6C has a simplified interface of the current aggregation unit 220 compared to the example shown in FIG. 6B. The example shown in FIG. 6C follows a method in which current values are summed through communication between battery racks, and the final summed value is transmitted to the current aggregation unit 220. In this case, it is difficult to set a short time delay because a communication time is required when the number of battery racks increases.

In the second comparative example, when the each rack BMS 310 sets the time delay from the detection of the overcurrent of the battery rack to the opening time point of the contactor to be short, as described with reference to FIG. 3, a specific contactor may be opened in a state in which the main line current is concentrated at that contactor, thereby damaging the corresponding contactor, and when a time delay is set to be long, the time the overcurrent flows in the battery rack increases, which may be dangerous.

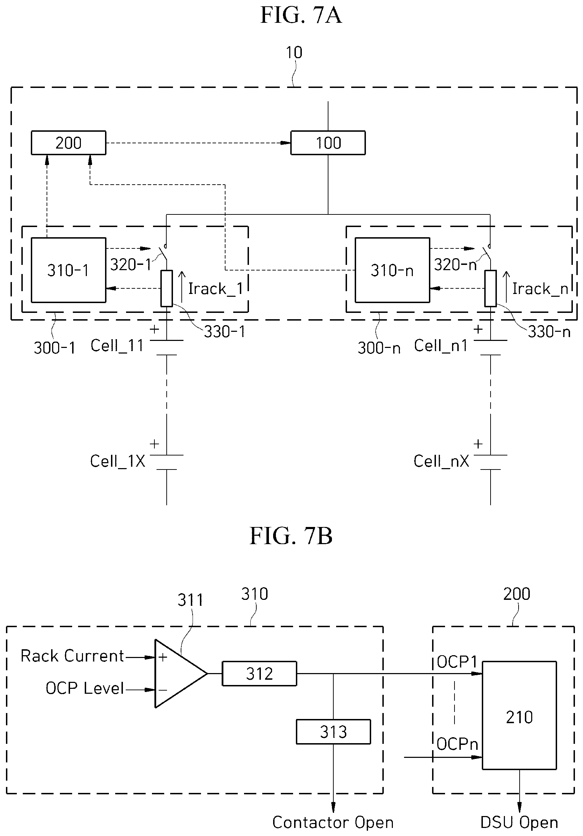

FIG. 7A is a schematic illustration of an apparatus for controlling a main line switch according to an embodiment of the present disclosure, and FIG. 7B is a control block diagram illustrating the apparatus for controlling a main line switch according to an embodiment of the present disclosure shown in FIG. 7A.

To quickly block an overcurrent at a low cost in comparison to the first comparative example and to safely block the overcurrent in comparison to the second comparative example, an apparatus 10 for controlling a main line switch according to an embodiment of the present disclosure gives a time delay from the time point of overcurrent detection of the rack BMS 310 disposed in each rack to the time point when the contactor 320 is opened and allows the switch controller 200 to control the DSU 100 based on an overcurrent detection signal of each rack.

The apparatus 10 for controlling a main line switch includes the DSU 100, which is a switch for flowing or blocking the main line current, the switch controller 200 for controlling the DSU 100, and a plurality of BCUs 300 for transmitting the overcurrent detection signal of each battery rack to the switch controller 200.

The apparatus 10 for controlling a main line switch as illustrated in FIG. 7A is the apparatus according to an embodiment, and the components of the apparatus 10 for controlling a main line switch according to the present disclosure are not limited to the embodiment illustrated in FIG. 7A, and some components may be added, changed, or omitted as needed.

The BCU 300 includes the rack BMS 310 (also referred to as "an R-BMS," "a rack BMS," or "a rack battery management system"), the contactor 320, and the current measurement unit 330. The current measurement unit 330 may be a shunt resistor or may include a shunt resistor. Assuming that n battery racks are mounted on the ESS to be protected from an overcurrent, numbers 1, ..., n of the battery rack are additionally assigned to the reference numerals of the BCU 300 and the components of the BCU 300 that are disposed in each battery rack. That is, a BCU, a rack BMS, a contactor, and a current measurement unit that are disposed in a first battery rack are denoted as reference numbers 300-1, 310-1, 320-1, and 330-1, respectively. In the same manner, BCUs, rack BMSs, contactors, and current measurement units that are disposed in the second to last (n^{th}) battery racks are denoted as reference numerals. Such a method of assigning reference numbers is also applied to the drawings related to the first and second comparative examples.

The apparatus 10 for controlling a main line switch according to an embodiment of the present disclosure may be applied for the overcurrent protection operation of the ESS including the plurality of battery racks.

As described above, the apparatus 10 for controlling a main line switch includes the DSU 100, the switch controller 200, and the plurality of BCUs 300. The BCU 300 is disposed in each battery rack to be protected from an overcurrent.

The rack BMS 310 detects the current flowing in the battery rack through the current measurement unit 330, transmits an overcurrent detection signal (e.g., a signal indicating that an overcurrent is detected in the battery rack) to the switch controller 200 as a contact point signal when the detected current exceeds a reference (or predetermined) OCP level, and controls the contactor 320 to be opened to block the current flowing to the battery rack. The contact point signal is not a signal including a current value but is a signal that distinguishes whether or not an overcurrent is detected and is a signal represented by either On (1) or Off (0). Therefore, the rack BMS 310 may transmit the overcurrent detection signal to the switch controller 200 more quickly than when the current value is directly transmitted to the switch controller 200 (e.g., as an analog value) as in the second comparative example.

The switch controller 200 may receive the overcurrent detection signal from the plurality of rack BMSs 310. The switch controller 200 controls the DSU 100 to be opened to block the main line current when the overcurrent detection signal received for a reference (or predetermined) time reaches a reference (or predetermined) number (e.g., two).

In the second comparative example, it takes between 2 and 3 seconds for all current values of the battery racks to reach the switch controller 200 via CAN communication, while in the apparatus 10 for controlling a main line switch according to an embodiment of the present disclosure, the time for the overcurrent detection signal of the rack BMS 310 to reach the switch controller 200 as a contact point signal is about 30 ms, and thus, in embodiments of the present disclosure, a determination whether or not to block the main line current can be determined more quickly when compared to the second comparative example. In addition, in an embodiment of the present disclosure, because the switch controller 200 controls the DSU 100 to be opened when a reference (or predetermined) number (e.g., two) or more of contact point signals are identified as 1 (On), the switch controller 200 may quickly block the main line current before receiving the overcurrent detection signal from all battery racks.

As illustrated in FIG. 7B, the rack BMS 310 includes the operational amplifier 311, the malfunction prevention counter 312, and the OCP time delay unit 313. The operational amplifier 311 receives the current of the battery rack through a positive input terminal, receives the OCP level through a negative input terminal, and then outputs a signal that amplifies a difference between the current of the battery rack and the OCP level to the malfunction prevention counter 312. The malfunction prevention counter 312 counts the number of times the output signal of the operational amplifier 311 exceeds a reference (or predetermined) threshold value during a reference (or predetermined) sampling time, and when the number reaches a set number of times, the malfunction prevention counter 312 transmits the overcurrent detection signal (On or 1) to the switch controller 200 as a contact point signal and operates the OCP time delay unit 313. The OCP time delay unit 313 controls the contactor 320 to be opened after a preset time (time delay) has elapsed. The OCP time delay unit 313 may include a timer and a control signal generator.

The OCP counter 210 of the switch controller 200 receives overcurrent detection signals OCP₁, ..., OCPₙ from the rack BMSs 310-1, ..., 310-n mounted on the battery racks, counts overcurrent detection signals having a contact point signal of 1, and when the number is greater than the reference (or predetermined) number (e.g., two), the OCP counter 210 controls the DSU 100 to be opened to block the main line current.

As described above, the apparatus 10 for controlling a main line switch according to an embodiment of the present disclosure is relatively less costly because it does not require a large shunt resistor to detect the main line overcurrent. In addition, because the apparatus 10 for controlling a main line switch provides the time delay from the time point of overcurrent detection of the rack BMS 310 disposed in each rack to the time point when the contactor 320 is opened and quickly transmits the overcurrent detection signal of each rack to the switch controller 200 as contact information, the DSU 100 may be opened under the control of the switch controller 200 before the last contactor 320 is opened to block the main line current, which improves stability.

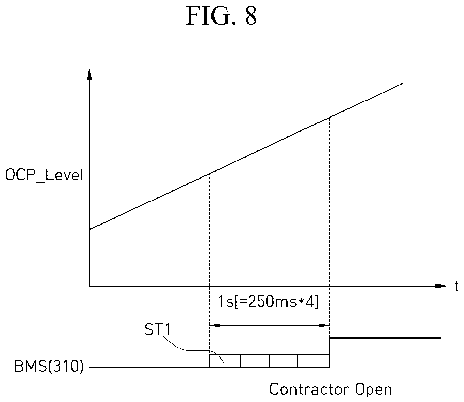

FIG. 8 is a graph illustrating a sampling period at which the rack BMS 310 detects an overcurrent of a battery rack.

As described above, the malfunction prevention counter 312 of the rack BMS 310 counts the number of times the output signal of the operational amplifier 311 continuously exceeds a reference (or predetermined) threshold value for each sampling period ST1, and when the number reaches a set number of times, the malfunction prevention counter 312 transmits the overcurrent detection signal (On or 1) to the switch controller 200 as a contact point signal and operates the OCP time delay unit 313. For example, to prevent a malfunction, the malfunction prevention counter 312 counts the output signal of the operational amplifier 311 that exceeds the threshold value according to each sampling period ST1 of 250 ms for 1 second, transmits an overcurrent detection signal (On=1) to the switch controller 200 as a contact point signal when the counted number reaches 4, and transmits a contactor 320 opening signal to the OCP time delay unit 313. For example, to prevent the malfunction of the contactor 320 or the DSU 100, the rack BMS 310 generates the overcurrent detection signal only when the overcurrent of the battery rack is clearly detected through a plurality of samplings.

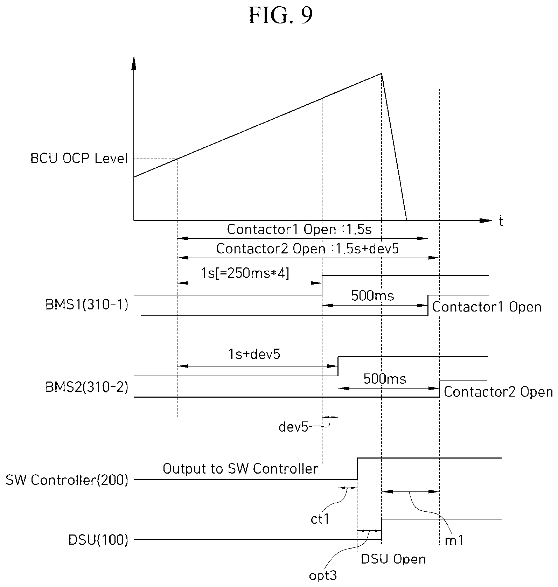

FIG. 9 is a timing diagram illustrating a main line current blocking time point of the apparatus for controlling a main line switch and a contactor opening time point of each battery rack according to an embodiment of the present disclosure.

The times (e.g., an overcurrent detection sampling period of 250 ms, a time delay from a transmission time point of the overcurrent detection signal to a contactor opening control time point of 500 ms, and a time required for opening the first contactor Contactor1 of 1.5 s) described in FIG. 9 are merely examples and may vary depending on an implementation case.

For example, the rack BMS 310 disposed in each battery rack measures the current of the battery rack at set sampling periods (e.g., 250 ms) when the current exceeding the reference (or predetermined) BCU OCP level is detected and transmits an overcurrent detection signal to the switch controller 200 as a contact point signal when the overcurrent is continuously detected four times. Because each rack BMS 310 independently detects the overcurrent of the battery rack, the time point when the overcurrent detection signal is transmitted to the switch controller 200 may vary depending on the rack BMS 310. As illustrated in FIG. 9, an overcurrent detection signal transmission time point of the BMS2 (310-2) is dev5 and is later than that of the BMS1 310-1. Accordingly, it takes 1 s+dev5 from the time point when the BMS1 310-1 first detects the overcurrent to the time point when the BMS2 301-2 transmits the overcurrent detection signal to the switch controller 200.

In the present embodiment, the switch controller 200 blocks the main line current when receiving at least two overcurrent detection signals. In such an embodiment, the switch controller 200 does not block the main line current until receiving an additional overcurrent detection signal after receiving the overcurrent detection signal of the BMS1 310-1 and controls the DSU 100 to be opened when receiving the overcurrent detection signal of the BMS2 310-2. Because the BMS2 310-2 transmits the overcurrent detection signal to the switch controller 200 as a contact point signal, the switch controller 200 controls the DSU 100 to be opened after a contact signal transmission time ct1 (e.g., 30 ms) has elapsed from the time point when the BMS2 310-2 transmits the overcurrent detection signal. Assuming that it takes opt3 (e.g., 50 ms) for the DSU 100 to be opened under the control of the switch controller 200, an intentional time delay from the time point when the rack BMS 310 transmits the overcurrent detection signal to the switch controller 200 to the time point when the contactor 320 of the rack is controlled to be opened may be set to a time that sums the contact point signal transmission time ct1, the DSU operation time opt3, and a margin m1 considering the occurrence of an error. When ct1 is 30 ms, opt3 is 50 ms, and m1 is 420 ms, the time delay may be set to ct1 (30 ms)+opt3 (50 ms)+m1 (420 ms)=500 ms. In such an embodiment, it takes 1.5 seconds (a sampling time of 1 second + a time delay of 500ms) from the time point when the BMS1 310-1 first detects the overcurrent to the time point when the first contactor Contactor1 is opened by the BMS1 310-1. In the example shown in FIG. 9, because the DSU 100 is opened before each contactor is opened, the main line current is blocked before the current flowing to each battery rack is blocked.

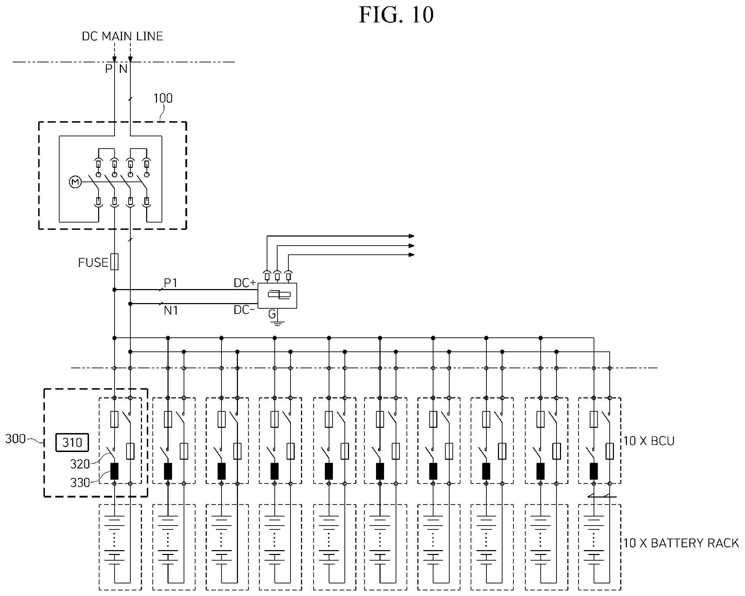

FIG. 10 is an electrical circuit diagram illustrating an ESS to which the apparatus for controlling a main line switch according to an embodiment of the present disclosure is applied. In FIG. 10, the switch controller 200 is omitted.

The ESS illustrated in FIG. 10 includes 10 battery racks, and the BCU 300 is disposed in each battery rack. The contactor 320 disposed in each battery rack blocks the current flowing to the corresponding battery rack when detecting the overcurrent under the control of the rack BMS 310, and the DSU 100 blocks the current of the DC main line under the control of the switch controller 200 when the aforementioned overcurrent detection condition (e.g., two or more overcurrent detection signals) is satisfied.

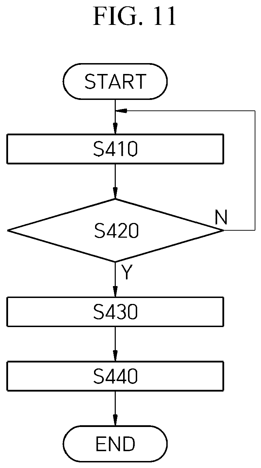

FIG. 11 is a flowchart describing steps of a method of controlling a main line switch according to an embodiment of the present disclosure. The method of controlling a main line switch shown in FIG. 11 is a method of controlling the DSU 100 of the ESS including the plurality of battery racks and is performed by the apparatus 10 for controlling a main line switch. The method of controlling a main line switch is described assuming that a current exceeding the reference (or predetermined) OCP level flows in the battery rack included in the ESS.

Referring to FIG. 11, the method of controlling a main line switch according to an embodiment of the present disclosure includes operations S410 to S440. The method of controlling a main line switch illustrated in FIG. 11 is the method according to an embodiment, and the operations of the method of controlling a main line switch according to embodiments of the present disclosure are not limited to the embodiment illustrated in FIG. 11, and some operations may be added, changed, or omitted as needed.

Operation S410 is an operation of generating, by the BCU 300, an overcurrent detection signal when an overcurrent of a target battery rack is detected and transmitting the overcurrent detection signal to the switch controller 200.

The BCU 300 disposed in each battery rack included in the ESS measures a current of the target battery rack by using the current measurement unit 330, generates an overcurrent detection signal when the current of the target battery rack exceeds a reference (or predetermined) OCP level, and transmits the overcurrent detection signal to the switch controller 200 as a contact point signal. The current measurement unit 330 may include a shunt resistor.

The BCU 300 measures the current of the target battery rack by using the current measurement unit 330 at reference (or predetermined) sampling periods (e.g., 250 ms), generates the overcurrent detection signal when the current of the target battery rack continuously exceeds the OCP level a set number of times (e.g., four times), and transmits the overcurrent detection signal to the switch controller 200 as a contact point signal.

Operation S420 is an operation of counting, by the switch controller 200, the overcurrent detection signal and determining whether or not the number of counted overcurrent detection signals is a reference (or predetermined) number or more.

When the switch controller 200 receives a reference (or predetermined) number (e.g., two) or more of overcurrent detection signals from the plurality of BCUs 300, operation S430 is performed, and otherwise, operation S410 is performed (e.g., the method is restarted).

Operation S430 is an operation of blocking, by the switch controller 200, the main line current.

Because the number of counted overcurrent detection signals is the reference (or predetermined) number (e.g., two) or more as the result of counting the overcurrent detection signals received from the plurality of BCUs 300, the switch controller 200 determines that the overcurrent flows in the main line and opens the DSU 100 to block the main line current flowing to the ESS.

Operation S440 is an operation of blocking, by the BCU 300, the current flowing to the battery rack.

The BCU 300 opens the contactor 320 of the target battery rack after a preset time delay from the time point when the overcurrent detection signal is generated to block the current flowing to the target battery rack.

The time delay is generally set to be greater than the sum of the time required for transmitting the contact point signal (e.g., the overcurrent detection signal) from the BCU 300 to the switch controller 200 and the operation time (e.g., the time required to be opened) of the DSU 100 (see, e.g., FIG. 9).

The aforementioned method of controlling a main line switch has been described with reference to the flowcharts presented in the drawings. For simplicity, the method has been shown and described as a series of blocks, but the present disclosure is not limited to the order of the blocks, some blocks may occur in a different order or simultaneously with other blocks shown and described herein, and various other branches, flow paths, and block orders that achieve the same or similar results may be implemented. In addition, not all the shown blocks may be required for implementing the method described herein.

In the description with reference to FIG. 11, each operation may be further subdivided into a larger number of additional operations or combined into a fewer number of operations according to the embodiments of the present disclosure. In addition, some operations may be omitted as needed, or the order between the operations may be changed. In addition, although other contents are omitted, the contents of FIGS. 7A to 10 may be applied to the content of FIG. 11. In addition, the content of FIG. 11 may be applied to the contents of FIGS. 7A to 10.

According to embodiments of the present disclosure, an overcurrent of a main line may be quickly blocked at a low cost through cooperative control between an overcurrent protection control device and a disconnect switch unit. For example, according to embodiments of the present disclosure, an overcurrent protection operation of each rack may be safely performed at a low cost.

Aspects and features of the present disclosure are not limited to those described above, and other aspects and features that are not specifically mentioned herein will be clearly understood by those skilled in the art from the description of the present disclosure below.

Although the present disclosure has been described above with respect to embodiments thereof, the present disclosure is not limited thereto. Various modifications and variations can be made thereto by those skilled in the art within the scopet of the present disclosure as defined by the appended claims.

## Claims

1. An apparatus for controlling a main line switch mounted on an energy storage system, the energy storage system comprising a plurality of battery racks (BAT) and a disconnect switch unit, the apparatus (10) comprising:
a battery connection unit (BCU) respectively on each of the battery racks (BAT), the battery connection unit (BCU) being configured to measure a current of a corresponding one of the battery racks (BAT) by using a built-in current measurement unit (330) and to generate an overcurrent detection signal when the current of the corresponding one of the battery racks (BAT) exceeds an overcurrent protection level; and
a switch controller (200) configured to open the disconnect switch unit (DSU) to block a main line current flowing to the energy storage system in response to the overcurrent detection signal from a reference number or more of battery connection units (BCU).

2. The apparatus as claimed in claim 1, wherein, the battery connection unit (BCU) is configured to open a contactor of the corresponding one of the battery racks (BAT) after a time delay from a time point when the overcurrent detection signal is generated to block a current flowing to the corresponding one of the battery racks (BAT).

3. The apparatus as claimed in claim 1 or 2, wherein the current measurement unit (330) comprises a shunt resistor.

4. The apparatus as claimed in claim 1, 2, or 3, wherein the battery connection unit (BCU) is configured to transmit the overcurrent detection signal to the switch controller (200) as a contact point signal.

5. The apparatus as claimed in any one of claims 1 to 4, wherein the battery connection unit (BCU) is configured to:
measure the current of the corresponding one of the battery racks (BAT) at sampling periods; and
generate the overcurrent detection signal based on the number of times the current of the corresponding one of the battery racks (BAT) exceeds the overcurrent protection level and transmit the overcurrent detection signal to the switch controller (200).

6. The apparatus as claimed in anhy one of claims 1 to 5, wherein the battery connection unit (BCU) is configured to:
measure the current of the corresponding one of the battery racks (BAT) at sampling periods; and
generate the overcurrent detection signal when the current of the corresponding one of the battery racks (BAT) continuously exceeds the overcurrent protection level a set number of times and transmit the overcurrent detection signal to the switch controller (200).

7. The apparatus as claimed in any one of claims 1 to 6, wherein the number of battery connection units (BCU) is two or more.

8. The apparatus as claimed in any one of claims 1 to 7, wherein the battery connection unit (BCU) is configured to:
transmit the overcurrent detection signal to the switch controller (200) as a contact point signal; and
after a preset time delay from a time point when the overcurrent detection signal is generated, open a contactor of the corresponding one of the battery racks (BAT) to block a current flowing thereto, and
wherein the time delay is greater than a sum of a time for transmitting the contact point signal to the switch controller (200) from the battery connection unit (BCU) and an operation time of the disconnect switch unit (DSU).

9. A method of controlling a main line switch of an energy storage system comprising a plurality of battery racks (BAT), the method comprising:
measuring, by a battery connection unit (BCU) respectively on each of the battery racks (BAT), a current of a corresponding one of the battery racks (BAT) by using a current measurement unit (330), generating an overcurrent detection signal when the current of the corresponding one of the battery racks (BAT) exceeds an overcurrent protection level, and transmitting the overcurrent detection signal to a switch controller (200); and
opening, by the switch controller (200), a disconnect switch unit (DSU) to block a main line current flowing to the energy storage system when receiving a number or more of overcurrent detection signals.

10. The method as claimed in claim 9, further comprising opening, by the battery connection unit (BCU), a contactor of the corresponding one of the battery racks (BAT) to block a current flowing thereto after a preset time delay from a time point when the overcurrent detection signal is generated.

11. The method as claimed in claim 9 or 10, wherein the current measurement unit (310) comprises a shunt resistor.

12. The method as claimed in claim 9, 10, or 11, wherein the measuring of the current comprises transmitting, by the battery connection unit (BCU), the overcurrent detection signal to the switch controller (200) as a contact point signal.

13. The method as claimed in any one of claims 9 to 12, wherein the measuring of the current comprises measuring, by the battery connection unit (BCU), the current of the corresponding one of the battery racks (BAT) at sampling periods, generating the overcurrent detection signal based on the number of times the current of the corresponding one of the battery racks (BAT) exceeds the overcurrent protection level, and transmitting the overcurrent detection signal to the switch controller (200).

14. The method as claimed in any one of claims 9 to 13, wherein the measuring of the current comprises measuring, by the battery connection unit (BCU), the current of the corresponding one of the battery racks (BAT) at sampling periods, generating the overcurrent detection signal when the current of the corresponding one of the battery racks (BAT) continuously exceeds the overcurrent protection level a set number of times, and transmitting the overcurrent detection signal to the switch controller (200).

15. The method as claimed in any one of claims 9 to 14, wherein the number of overcurrent detection signals is two or more.

16. The method as claimed in any one of claims 9 to 15, further comprising opening, by the battery connection unit (BCU), a contactor of the corresponding one of the battery racks (BAT) to block a current flowing to the corresponding one of the battery racks (BAT) after a time delay from a time point when the overcurrent detection signal is generated,
wherein, in the measuring of the current, the battery connection unit (BCU) transmits the overcurrent detection signal to the switch controller (200) as a contact point signal, and
wherein the time delay is greater than a sum of a time for transmitting the contact point signal to the switch controller (200) from the battery connection unit (BCU) and an operation time of the disconnect switch unit (DSU).
